(19) Europäisches Patentamt
European Patent Office
Office européen des brevets

(11) EP 2 937 746 A1

(12) # EUROPÄISCHE PATENTANMELDUNG

(43) Veröffentlichungstag:
**28.10.2015 Patentblatt 2015/44**

(51) Int Cl.:
***G05B 11/36*** *(2006.01)*

(21) Anmeldenummer: **14165962.3**

(22) Anmeldetag: **25.04.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Siemens Aktiengesellschaft**
**80333 München (DE)**

(72) Erfinder: **Tautz, Wilfried**
**91301 Forchheim (DE)**

(54) **Regeleinrichtung für eine Hydraulikzylindereinheit mit optimierter Linearisierung**

(57) Ein Regler (15) nimmt eine auf einen Kolben (3) der Hydraulikzylindereinheit (1) bezogene Sollgröße (g*) und eine auf den Kolben (3) der Hydraulikzylindereinheit (1) bezogene Istgröße (g) entgegen. Er ermittelt anhand von deren Differenz (δg) eine vorläufige Stellgröße (u'). Eine dem Regler (15) nachgeordnete Linearisierungseinheit (17) multipliziert die vorläufige Stellgröße (u') mit einem Linearisierungsfaktor (F) und gibt das Produkt als endgültige Stellgröße (u) an eine Ventilsteuereinheit (7) aus, so dass die Istgröße (g) der Sollgröße (g*) mit einer Verstellgeschwindigkeit nachgeführt wird. Die Linearisierungseinheit (17) ermittelt anhand beidseitig des Kolbens (3) herrschender Arbeitsdrücke (pA, pB) und/oder zufluss- und abflussseitig der Ventilsteuereinheit (7) herrschender Arbeitsdrücke (pP, pT) sowie einer vom Kolben (3) auszuübenden Sollkolbenkraft (FKL) Sollwerte (pA*, pB*) für die Arbeitsdrücke (pA, pB). Sie bestimmt den Linearisierungsfaktor (F) dynamisch als Funktion einer Iststellung (s) des Kolbens (3), der Sollwerte (pA*, pB*) sowie der zufluss- und abflussseitig der Ventilsteuereinheit (7) herrschenden Arbeitsdrücke (pP, pT).

FIG 4

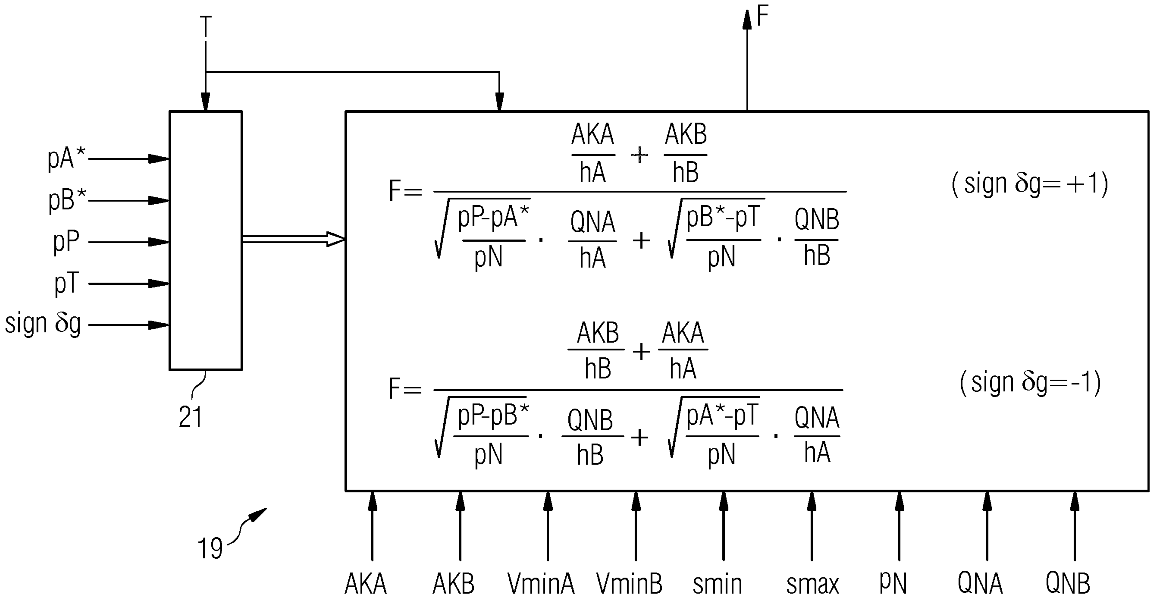


$$F=\frac{\frac{AKA}{hA}+\frac{AKB}{hB}}{\sqrt{\frac{pP-pA^*}{pN}}\cdot\frac{QNA}{hA}+\sqrt{\frac{pB^*-pT}{pN}}\cdot\frac{QNB}{hB}}\quad(\text{sign }\delta g=+1)$$

$$F=\frac{\frac{AKB}{hB}+\frac{AKA}{hA}}{\sqrt{\frac{pP-pB^*}{pN}}\cdot\frac{QNB}{hB}+\sqrt{\frac{pA^*-pT}{pN}}\cdot\frac{QNA}{hA}}\quad(\text{sign }\delta g=-1)$$

EP 2 937 746 A1

## Beschreibung

Die vorliegende Erfindung geht aus von einer Regeleinrichtung zum Regeln einer Hydraulikzylindereinheit,

- wobei die Regeleinrichtung einen Regler aufweist, der eingangsseitig eine auf einen Kolben der Hydraulikzylindereinheit bezogene Sollgröße und eine auf den Kolben der Hydraulikzylindereinheit bezogene Istgröße entgegennimmt und anhand der Differenz von Sollgröße und Istgröße eine vorläufige Stellgröße für eine Ventilsteuereinheit der Hydraulikzylindereinheit ermittelt,
- wobei dem Regler eine Linearisierungseinheit nachgeordnet ist, welche die vorläufige Stellgröße mit einem Linearisierungsfaktor multipliziert und die mit dem Linearisierungsfaktor multiplizierte vorläufige Stellgröße als endgültige Stellgröße an die Ventilsteuereinheit ausgibt, so dass die Istgröße der Sollgröße mit einer Verstellgeschwindigkeit nachgeführt wird.

Alternativ geht die vorliegende Erfindung aus von einer Regeleinrichtung zum Regeln einer Hydraulikzylindereinheit,

- wobei die Regeleinrichtung einen als P-Regler ausgebildeten Regler aufweist, der eingangsseitig eine Regelgröße entgegennimmt, anhand der Regelgröße eine Stellgröße für eine Ventilsteuereinheit der Hydraulikzylindereinheit ermittelt und die Stellgröße an die Ventilsteuereinheit ausgibt, so dass eine auf einen Kolben der Hydraulikzylindereinheit bezogene Istgröße einer auf den Koben bezogenen Sollgröße mit einer Verstellgeschwindigkeit nachgeführt wird,
- wobei dem Regler eine Linearisierungseinheit vorgeordnet ist, welche die Sollgröße und die Istgröße entgegennimmt, deren Differenz mit einem Linearisierungsfaktor multipliziert und die mit dem Linearisierungsfaktor multiplizierte Differenz als Regelgröße an den Regler ausgibt.

Hydraulikzylindereinheiten zeigen ein Regelverhalten, das stark vom Betriebspunkt der Hydraulikzylindereinheit abhängig ist. Ein Regler für eine Hydraulikzylindereinheit, der für einen bestimmten Betriebspunkt optimiert wurde, arbeitet in anderen Betriebspunkten weniger gut oder schlecht.

Zum Verbessern des Regelverhaltens ist im Stand der Technik gemäß der WO 2009/056 378 A2 bekannt, dem Regler eine Linearisierungseinheit vor- oder nachzuordnen. Die Linearisierungseinheit der WO 2009/056 378 A2 bestimmt den Linearisierungsfaktor dynamisch als Funktion einer Iststellung des Kolbens, beidseitig des Kolbens herrschender Arbeitsdrücke sowie zufluss- und abflussseitig der Ventilsteuereinheit herrschender Arbeitsdrücke. Die Linearisierungseinheit bestimmt den Linearisierungsfaktor derart, dass ein Verhältnis der Verstellgeschwindigkeit der Istgröße zur Differenz von Sollgröße und Istgröße unabhängig von der Iststellung des Kolbens, den beidseitig des Kolbens herrschenden Arbeitsdrücken und den zufluss- und abflussseitig der Ventilsteuereinheit herrschenden Arbeitsdrücken ist.

Die Vorgehensweise gemäß der WO 2009/056 378 A2 stellt bereits einen deutlichen Fortschritt dar. In der Praxis hat sich jedoch gezeigt, dass auch diese Vorgehensweise noch mit Nachteilen behaftet ist.

Ein Nachteil besteht darin, dass die Arbeitsdrücke beidseitig des Kolbens sowohl im Hydrauliksystem als auch in der Linearisierung verwendet werden. Die Linearisierung kompensiert zwar die Effekte im Hydrauliksystem, aber durch die Ventilsteuereinheit verzögert. Dadurch erzeugt beispielsweise eine Stellgröße, die einen Kraftanstieg bewirken soll, einen geringeren Kraftanstieg als erwartet. Die Abweichung vom erwarteten Kraftanstieg ist umso größer, je größer die Stellgröße ist (Schleppfehler). In der Folge weist die Regelung eine verringerte Dynamik auf.

Ein weiterer Nachteil besteht darin, dass eine Stellgröße, die den Kolben der Hydraulikzylindereinheit mit einer bestimmten Geschwindigkeit bewegt, über die Linearisierung durch Kraftänderungen (Druckänderungen) moduliert wird. Eine derartige Modulation entspricht einer positiven Kraftrückführung (Mitkopplung, positive Rückkopplung). In der Folge wird die Regelung destabilisiert.

Die Aufgabe der vorliegenden Erfindung besteht darin, Möglichkeiten zu schaffen, mittels derer die Nachteile des Standes der Technik beseitigt werden.

Die Aufgabe wird zunächst durch eine Regeleinrichtung mit den Merkmalen des Anspruchs 1 gelöst.

Erfindungsgemäß wird eine Regeleinrichtung der eingangs genannten Art dadurch ausgestaltet,

- dass die Linearisierungseinheit anhand beidseitig des Kolbens herrschender Arbeitsdrücke und/oder zufluss- und abflussseitig der Ventilsteuereinheit herrschender Arbeitsdrücke sowie einer vom Kolben auszuübenden Sollkolbenkraft Sollwerte für die beidseitig des Kolbens herrschenden Arbeitsdrücke ermittelt und
- dass die Linearisierungseinheit den Linearisierungsfaktor dynamisch als Funktion einer Iststellung des Kolbens, der Sollwerte für die beidseitig des Kolbens herrschenden Arbeitsdrücke sowie der zufluss- und abflussseitig der Ventilsteuereinheit herrschenden Arbeitsdrücke bestimmt.

Erfindungsgemäß wird der Linearisierungsfaktor also nicht basierend auf den beidseitig des Kolbens herrschenden Arbeitsdrücken selbst ermittelt, sondern basierend auf Sollwerten für die Arbeitsdrücke, die aus den Arbeitsdrücken in Verbindung mit einer Sollkolbenkraft ermittelt werden. Vorzugsweise bestimmt die Linearisierungseinheit den Linearisierungsfaktor derart, dass ein Verhältnis der Verstellgeschwindigkeit der Istgröße zur Differenz von Sollgröße und Istgröße unabhängig von der Iststellung des Kolbens, den beidseitig des Kolbens herrschenden Arbeitsdrücken und den zufluss- und abflussseitig der Ventilsteuereinheit herrschenden Arbeitsdrücken ist.

Der Regler kann prinzipiell als beliebiger Regler ausgebildet sein. In vielen Fällen ist es jedoch ausreichend, wenn der Regler als P-Regler (= Proportionalregler) ausgebildet ist.

In dem Spezialfall, dass der Regler als P-Regler ausgebildet ist, kann die Reihenfolge von Regler und Linearisierungseinheit vertauscht werden. Die erfindungsgemäße Ausgestaltung muss daher zwar dadurch angepasst werden, dass in diesem Fall die Linearisierungseinheit die Differenz von Sollgröße und Istgröße mit dem Linearisierungsfaktor multipliziert und die mit dem Linearisierungsfaktor multiplizierte Differenz dem Regler als dessen Eingangsgröße zuführt. Die Art und Weise der Ermittlung des Linearisierungsfaktors bleibt jedoch unverändert.

Es ist möglich, dass die Sollgröße und die Istgröße Positionen des Kolbens der Hydraulikzylindereinheit sind. In diesem Fall ermittelt vorzugsweise die Regeleinrichtung die Sollkolbenkraft anhand einer Eigenkraft und einer Verstellkraft, wobei die Eigenkraft durch ein Eigengewicht einer mittels des Kolbens bewegten Masse bestimmt ist und die Regeleinrichtung die Verstellkraft anhand einer vom Regler abgegebenen Größe ermittelt, aus der durch Filterung die vorläufige oder die endgültige Stellgröße ermittelt wird. Diese Ausgestaltung führt im Falle eines Positionsreglers zu einer einfachen, zuverlässigen Reglerstruktur.

Alternativ ist es möglich, dass die Sollgröße eine Solllastkraft ist und die Istgröße eine von der Hydraulikzylindereinheit auf eine Last ausgeübte Istlastkraft ist. In diesem Fall ermittelt vorzugsweise die Regeleinrichtung die Sollkolbenkraft anhand einer Eigenkraft und der Sollgröße, wobei die Eigenkraft durch ein Eigengewicht einer mittels des Kolbens bewegten Masse bestimmt ist.

Vorzugsweise ermittelt im letztgenannten Fall die Regeleinrichtung anhand der Eigenkraft und der Sollgröße einen Kraftsollwert und sodann die Sollkolbenkraft durch Verzögern des Kraftsollwerts mittels eines Verzögerungsgliedes. Das Verzögerungsglied kann beispielsweise als PT1-Glied, als PT2-Glied, als Totzeitkonstante und dergleichen mehr ausgebildet sein. Eine Ausbildung als PT2-Glied ist bevorzugt.

Die Sollkolbenkraft liefert gemäß der Beziehung

$$FKL = pA^* \cdot AKA + pB^* \cdot AKB \qquad (1)$$

eine Bedingung zur Ermittlung der Sollwerte. FKL ist die Sollkolbenkraft. pA* und pB* sind die Sollwerte der beidseitig des Kolbens herrschenden Arbeitsdrücke. AKA und AKB sind die jeweils wirksamen Arbeitsflächen. Zur eindeutigen Bestimmung der Sollwerte pA* und pB* ist jedoch eine weitere Gleichung erforderlich. In der Praxis hat es sich als günstig erwiesen, dass die Regeleinrichtung die Sollwerte für die beidseitig des Kolbens herrschenden Arbeitsdrücke derart ermittelt, dass die Summe der Sollwerte gleich einer Linearkombination der Summe der beidseitig des Kolbens herrschenden Arbeitsdrücke und der Summe der zufluss- und abflussseitig der Ventilsteuereinheit herrschenden Arbeitsdrücke ist. Wenn also mit pA und pB die beidseitig des Kolbens herrschenden Arbeitsdrücke und mit pP und pT die zufluss- und abflussseitig der Ventilsteuereinheit herrschenden Arbeitsdrücke bezeichnet sind, gilt vorzugsweise zusätzlich zu der obigen Gleichung weiterhin die Beziehung

$$pA^* + pB^* = \alpha \cdot (pA + pB) + (1 - \alpha) \cdot (pP + pT) \qquad (2)$$

$\alpha$ ist ein Wichtungsfaktor, der zwischen 0 und 1 liegt. Die Grenzen selbst, also die Werte 0 und 1, können ebenfalls angenommen werden.

In der Praxis führt es weiterhin zu einer stabileren Linearisierung, wenn die Regeleinrichtung die Sollwerte für die beidseitig des Kolbens herrschenden Arbeitsdrücke auf Werte zwischen den zufluss- und abflussseitig der Ventilsteuereinheit herrschenden Arbeitsdrücken begrenzt.

Eine weitere Maßnahme, die zur Stabilisierung der Linearisierung beiträgt, besteht darin, dass die Regeleinrichtung die beidseitig des Kolbens herrschenden Arbeitsdrücke vor der Ermittlung der Sollwerte für die beidseitig des Kolbens herrschenden Arbeitsdrücke glättet. Eine Zeitkonstante, mit der die Glättung erfolgt, kann beispielsweise zwischen 10 ms und 1000 ms liegen, vorzugsweise zwischen 30 ms und 300 ms. Insbesondere ein Wert von ca. 100 ms hat sich als vorteilhaft erwiesen.

Die Regeleinrichtung kann als Hardwarestruktur ausgebildet sein. Vorzugsweise ist sie jedoch als softwareprogrammierbare Regeleinrichtung ausgebildet und mit einem Softwaremodul programmiert, so dass sie aufgrund der Programmierung mit dem Softwaremodul als erfindungsgemäße Regeleinrichtung ausgebildet ist.

Das Softwaremodul umfasst Maschinencode, dessen Abarbeitung durch eine an eine Hydraulikzylindereinheit angebundene softwareprogrammierbare Regeleinrichtung bewirkt, dass die Regeleinrichtung als erfindungsgemäße Regeleinrichtung ausgebildet ist. Das Softwaremodul kann in maschinenlesbarer Form (insbesondere in elektronischer Form) auf einem Datenträger gespeichert sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:

FIG 1 ein Blockschaltbild einer Regeleinrichtung und einer Hydraulikzylindereinheit,
FIG 2 eine erste Ausgestaltung der Regeleinrichtung,
FIG 3 eine zweite Ausgestaltung der Regeleinrichtung,
FIG 4 eine Ermittlungseinrichtung einer Linearisierungseinheit,
FIG 5 eine mögliche Ausgestaltung der Regeleinrichtung im Falle einer Positionsregelung,
FIG 6 eine mögliche Ausgestaltung der Regeleinrichtung im Falle einer Kraftregelung,
FIG 7 eine mögliche Ausgestaltung eines Sollwertermittlers,
FIG 8 eine weitere mögliche Ausgestaltung eines Sollwertermittlers und
FIG 9 einen Sollwertermittler und Glättungsglieder.

Gemäß FIG 1 weist eine Hydraulikzylindereinheit 1 einen Hydraulikzylinder 2 auf, in dem ein Kolben 3 beweglich gelagert ist. Der Kolben 3 ist innerhalb des Hydraulikzylinders 1 zwischen einer Minimalstellung smin und einer Maximalstellung smax bewegbar. Er befindet sich also zu jedem Zeitpunkt bei einer Iststellung s, die zwischen der Minimalstellung smin und der Maximalstellung smax liegt.

Der Kolben 3 weist eine erste Arbeitsfläche 4A und eine zweite Arbeitsfläche 4B auf. Jede Arbeitsfläche 4A, 4B ist einem entsprechenden Arbeitsvolumen 5A, 5B zugewandt.

Die Arbeitsvolumina 5A, 5B sind über Hydraulikpfade 6A, 6B und eine Ventilsteuereinheit 7 mit einer Hydraulikpumpe 8 und einem Hydraulikreservoir 9 hydraulisch verbunden. Die Hydraulikpfade 6A, 6B erstrecken sich von dem jeweiligen Arbeitsvolumen 5A, 5B bis zur Ventilsteuereinheit 7.

Wenn der Kolben 3 sich in seiner Minimalstellung smin befindet, befindet sich im Hydraulikpfad 6A ein bestimmtes Volumen einer Hydraulikflüssigkeit 10. Dieses Volumen ist die minimale Menge an Hydraulikflüssigkeit 10, die sich zwischen der Ventilsteuereinheit 7 und der Arbeitsfläche 4A des Kolbens 3 befindet. Diese Menge an Hydraulikflüssigkeit 10 ist das minimal mögliche wirksame Volumen für das Arbeitsvolumen 5A. Es wird nachfolgend mit dem Bezugszeichen VminA bezeichnet.

In analoger Weise befindet sich im Hydraulikpfad 6B eine bestimmte Menge an Hydraulikflüssigkeit 10, wenn der Kolben 3 sich in seiner Maximalstellung smax befindet. Diese Menge an Hydraulikflüssigkeit 10 stellt ein minimal mögliches wirksames Volumen für das Arbeitsvolumen 5B dar. Dieses Minimalvolumen wird nachfolgend mit dem Bezugszeichen VminB bezeichnet.

Wenn der Kolben 3 sich bei einer beliebigen Iststellung s befindet, weist das Arbeitsvolumen 5A einen wirksamen Volumenwert VA auf, der sich zu

$$VA = V\min A + AKA \cdot (s - s\min) \qquad (3)$$

ergibt. Mit dem Bezugszeichen AKA ist der Flächenwert der dem Arbeitsvolumen 5A zugewandten Arbeitsfläche 4A des Kolbens 3 bezeichnet.

Es ist möglich, das wirksame Volumen VA durch den Flächenwert AKA zu dividieren. Der Quotient

$$ha = VA / AKA \qquad (4)$$

entspricht einer effektiven Höhe einer Säule der Hydraulikflüssigkeit 10 über dem Kolben 3.

In analoger Weise können anhand des minimal möglichen wirksamen Volumens VminB für das Arbeitsvolumen 5B, des Flächenwerts AKB der dem Arbeitsvolumen 5B zugewandten Arbeitsfläche 4B, der Iststellung s und der Maximalstellung smax gemäß den Beziehungen

$$VB = V\min B + AKB \cdot (s\max - s) \quad (5)$$

und

$$hB = VB / AKB \quad (6)$$

korrespondierende Werte VB und hB für die zweite Arbeitsfläche 4B bzw. das zweite Arbeitsvolumen 5B ermittelt werden.

Im Arbeitsvolumen 5A herrscht ein erster Arbeitsdruck pA, im zweiten Arbeitsvolumen 5B ein zweiter Arbeitsdruck pB. Über die Hydraulikpumpe 8 wird die Hydraulikflüssigkeit 10 mit einem Pumpendruck pP beaufschlagt. Im Hydraulikreservoir 9 herrscht ein Tankdruck pT. Der Pumpendruck pP entspricht einem zuflussseitig der Ventilsteuereinheit 7 herrschenden Arbeitsdruck. Der Tankdruck pT entspricht einem abflussseitig der Ventilsteuereinheit 7 herrschenden Arbeitsdruck.

Die Ventilsteuereinheit 7 ist im vorliegenden Fall als Vierwegeventil ausgebildet. Mittels eines Vierwegeventils ist jedes der beiden Arbeitsvolumina 5A, 5B alternativ mit der Pumpe 8 oder mit dem Hydraulikreservoir 9 verbindbar. Alternativ könnte die Ventilsteuereinheit 7 als Zweiwegeventil ausgebildet sein. In diesem Fall würde eines der beiden Arbeitsvolumina 5A, 5B mit einem konstanten Druck beaufschlagt werden, beispielsweise mit der Hälfte des Pumpendrucks pP. Das andere der Arbeitsvolumina 5A, 5B kann in diesem Fall alternativ mit der Pumpe 8 oder dem Hydraulikreservoir 9 verbunden werden.

Die Ventilsteuereinheit 7 und mit ihr die gesamte Hydraulikzylindereinheit 1 wird mittels einer Regeleinrichtung 11 geregelt. Die Regeleinrichtung 11 ist vorzugsweise entsprechend FIG 1 als softwareprogrammierbare Regeleinrichtung 11 ausgebildet. Die Regeleinrichtung 11 wird daher mittels eines Softwaremoduls 12 programmiert. Das Softwaremodul 12 kann der Regeleinrichtung 11 beispielsweise mittels eines Datenträgers 13 zugeführt werden, auf dem das Softwaremodul 12 in maschinenlesbarer Form gespeichert ist. Als Datenträger 13 kommt prinzipiell ein beliebiger Datenträger in Frage. Dargestellt ist (rein beispielhaft) in FIG 1 eine CD-ROM 13.

Das Softwaremodul 12 umfasst Maschinencode 14, der von der Regeleinrichtung 11 abarbeitbar ist. Das Abarbeiten des Maschinencodes 14 durch die Regeleinrichtung 11 bewirkt, dass die Regeleinrichtung 11 die Hydraulikzylindereinheit 1 so regelt, wie dies nachfolgend näher erläutert wird. Die Programmierung der Regeleinrichtung 11 mit dem Softwaremodul 12 bewirkt die entsprechende Ausbildung der Regeleinrichtung 11.

Der Regeleinrichtung 11 werden gemäß FIG 1 zunächst eine auf den Kolben 3 der Hydraulikzylindereinheit 1 bezogene Sollgröße g* und eine auf den Kolben 3 der Hydraulikzylindereinheit 1 bezogene Istgröße g zugeführt. Die Sollgröße g* und die Istgröße g sind typischerweise Positionen des Kolbens 3 oder auf den Kolben 3 wirkende Kräfte. Die Regeleinrichtung 11 ermittelt anhand der Sollgröße g* und der Istgröße g in noch zu erläuternder Weise eine Stellgröße u für die Ventilsteuereinheit 7 und gibt die Stellgröße u an die Ventilsteuereinheit 7 aus. Die Regeleinrichtung 11 führt dadurch die Regelung der Hydraulikzylindereinheit 1 (genauer: des Kolbens 3) durch.

Die Regeleinrichtung 11 ist vorzugsweise entsprechend FIG 2 ausgebildet. Gemäß FIG 2 weist die Regeleinrichtung 11 einen Regler 15 auf, der eingangsseitig die Sollgröße g* und die Istgröße g entgegennimmt. In einem Knotenpunkt 16 wird die Differenz δs von Sollgröße g* und Istgröße g gebildet. Diese Differenz wird nachfolgend als Regeldifferenz δg bezeichnet.

Die Regeldifferenz δg wird dem Regler 15 zugeführt, der anhand der Regeldifferenz δg eine vorläufige Stellgröße u' für die Ventilsteuereinheit 7 ermittelt. Der Regler 15 ist entsprechend FIG 2 vorzugsweise als P-Regler ausgebildet.

Dem Regler 15 ist eine Linearisierungseinheit 17 nachgeordnet. Die Linearisierungseinheit 17 weist einen Multiplizierer 18 und eine Ermittlungseinrichtung 19 auf. Die Ermittlungseinrichtung 19 bestimmt in noch zu erläuternder Weise einen Linearisierungsfaktor F und gibt den Linearisierungsfaktor F an den Multiplizierer 18 aus. Der Multiplizierer 18 nimmt weiterhin vom Regler 15 die vorläufige Stellgröße u' entgegen und multipliziert die vorläufige Stellgröße u' mit dem Linearisierungsfaktor F. Die Linearisierungseinheit 17 ermittelt auf diese Weise eine endgültige Stellgröße u, welche an die Ventilsteuereinheit 7 ausgegeben wird.

Die Ventilsteuereinheit 7 stellt sich entsprechend der an sie übermittelten Stellgröße u ein. Dadurch wird bewirkt, dass der Kolben 3 verschoben bzw. verstellt wird oder die Arbeitsdrücke pA, pB eingestellt werden bzw. allgemein die Istgröße g der Sollgröße g* mit der Verstellgeschwindigkeit nachgeführt wird.

Bei der Ausgestaltung gemäß FIG 2 kann der Regler 15 prinzipiell ein beliebiger Regler sein. Eine Ausgestaltung des Reglers 15 als P-Regler ist jedoch in der Regel ausreichend und auch bevorzugt.

Alternativ zu der Ausgestaltung gemäß FIG 2 ist es gemäß FIG 3 möglich, die Reihenfolge von Regler 15 und Linearisierungseinheit 17 zu vertauschen. In diesem Fall ist die Ausgestaltung des Reglers 15 als P-Regler zwingend. Im Übrigen ist die Wirkungsweise der Ausgestaltung gemäß FIG 3 völlig analog zu der Ausgestaltung gemäß FIG 2. Von Detailerläuterungen zu FIG 3 kann daher abgesehen werden.

Die Linearisierungseinheit 17 weist einen Sollwertermittler 20 auf. Dem Sollwertermittler 20 werden die beidseitig des Kolbens 3 herrschenden Arbeitsdrücke pA, pB und eine vom Kolben 3 auszuübende Sollkolbenkraft FKL zugeführt. Der Sollwertermittler 20 ermittelt anhand der beidseitig des Kolbens 3 herrschenden Arbeitsdrücke pA, pB und der Sollkolbenkraft FKL Sollwerte pA*, pB* für die beidseitig des Kolbens 3 herrschenden Arbeitsdrücke pA, pB. Der Sollwertermittler 20 führt die Sollwerte pA*, pB* für die beidseitig des Kolbens 3 herrschenden Arbeitsdrücke pA, pB der Ermittlungseinrichtung 19 zu. Es ist möglich, dass der Sollwertermittler 20 die Sollwerte pA*, pB* für die beidseitig des Kolbens 3 herrschenden Arbeitsdrücke pA, pB ausschließlich anhand der Sollkolbenkraft FKL und der beidseitig des Kolbens 3 herrschenden Arbeitsdrücke pA, pB ermittelt. Alternativ ist es möglich, dass der Sollwertermittler 20 zusätzlich auch die zufluss- und abflussseitig der Ventilsteuereinheit 7 herrschenden Arbeitsdrücke pP, pT mit berücksichtigt.

Die Ermittlungseinrichtung 19 bestimmt den Linearisierungsfaktor F dynamisch als Funktion der Iststellung s des Kolbens 3, der Sollwerte pA*, pB* für die beidseitig des Kolbens 3 herrschenden Arbeitsdrücke pA, pB sowie der zufluss- und abflussseitig der Ventilsteuereinheit 7 herrschenden Arbeitsdrücke pP, pT. Die Ermittlungseinrichtung 19 bestimmt den Linearisierungsfaktor F derart, dass ein Verhältnis der Verstellgeschwindigkeit der Istgröße g zur Differenz $\delta$g von Sollgröße g* und Istgröße g unabhängig von der Iststellung s des Kolbens 3, den beidseitig des Kolbens 3 herrschenden Arbeitsdrücken pA, pB und den zufluss- und abflussseitig der Ventilsteuereinheit 7 herrschenden Arbeitsdrücken pP, pT ist.

Eine bevorzugte Wirkungsweise der Ermittlungseinrichtung 19 wird nachfolgend in Verbindung mit FIG 4 detaillierter erläutert.

Die Regeleinrichtung 11 ist gemäß FIG 1 üblicherweise mit einem Arbeitstakt T getaktet. Mit der Frequenz des Arbeitstaktes T nimmt die Regeleinrichtung 11 jeweils eine neue Sollgröße g* und eine neue Istgröße g entgegen, ermittelt die Stellgröße u und gibt die Stellgröße u an die Ventilsteuereinheit 7 aus.

Ebenfalls mit dem Arbeitstakt T werden der Ermittlungseinrichtung 19 gemäß FIG 4 jeweils neue Werte für die Iststellung s und die Sollwerte pA*, pB* für die beidseitig des Kolbens 3 herrschenden Arbeitsdrücke pA, pB zugeführt. Weiterhin wird der Ermittlungseinrichtung 19 das Vorzeichen der Regeldifferenz $\delta$g zugeführt. Das taktweise Zuführen dieser Größen s, pA, pB, sign$\delta$g ist in FIG 4 dadurch angedeutet, dass der Ermittlungseinrichtung 19 ein Latch 21 vorgeordnet ist, das mit dem Arbeitstakt T getaktet ist.

Der Pumpendruck pP und der Tankdruck pT sind in der Regel konstant. Es ist daher möglich, diese beiden Drücke pP, pT der Ermittlungseinrichtung 19 einmalig (d. h. vorab und damit als Parameter) zuzuführen. Alternativ ist es möglich, den zuflussseitigen Arbeitsdruck pP und den abflussseitigen Arbeitsdruck pT der Ermittlungseinrichtung 19 entsprechend der Darstellung in FIG 4 mit dem Arbeitstakt T getaktet und damit als Variable zuzuführen.

In der Regel benötigt die Ermittlungseinrichtung 19 zur Berechnung des Linearisierungsfaktors F weitere Daten. Die weiteren Daten umfassen in der Regel Leistungsdaten pN, QNA, QNB der Ventilsteuereinheit 7, die beidseitig des Kolbens 3 wirksamen Arbeitsflächen AKA, AKB sowie die beidseits des Kolbens 3 minimal möglichen wirksamen Volumina VminA, VminB. Diese Werte können der Ermittlungseinrichtung 19 fest vorgegeben sein, beispielsweise durch das Softwaremodul 12. Alternativ können die weiteren Daten - zumindest teilweise - der Ermittlungseinrichtung 19 nach der Programmierung der Regeleinrichtung 11 als Parameter (d. h. im Rahmen der Inbetriebsetzung der Regeleinrichtung 11) vorgegeben werden, die während des Betriebs der Regeleinrichtung 11 unverändert beibehalten werden.

Der Linearisierungsfaktor F ist abhängig vom Vorzeichen der Regeldifferenz $\delta$g. Nachfolgend wird angenommen, dass die Regeldifferenz $\delta$g positiv ist (sign$\delta$g = +1). Im Falle einer Positionsregelung soll somit der Kolben 3 in die positive Richtung verschoben werden, also in Richtung auf die Maximalstellung smax zu. Im Falle einer Kraftregelung soll somit eine in die positive Richtung wirkende Kraft vergrößert bzw. eine in die negative Richtung wirkende Kraft verkleinert werden. Wenn die Regeldifferenz $\delta$g positiv ist, bestimmt die Ermittlungseinrichtung 19 den Linearisierungsfaktor F vorzugsweise zu

$$F = K \cdot \frac{\frac{AKA}{hA} + \frac{AKB}{hB}}{\sqrt{\frac{pP - pA^*}{pN} \cdot \frac{QNA}{hA}} + \sqrt{\frac{pB^* - pT}{pN} \cdot \frac{QNB}{hB}}} \qquad (7)$$

K ist ein frei wählbarer, konstanter Skalierungsfaktor. Die anderen in obiger Formel verwendeten Größen sind - mit Ausnahme der Leistungsdaten pN, QNA, QNB der Ventilsteuereinheit 7 - bereits definiert. Die Leistungsdaten pN, QNA und QNB der Ventilsteuereinheit 7 haben folgende Bedeutung:

- pN ist ein (prinzipiell beliebiger) Nominaldruck. Er entspricht einem Referenzdruck, auf den die Größen QNA, QNB bezogen sind.
- QNA ist ein Nennvolumenstrom, der in das Arbeitsvolumen 5A strömt, wenn eine Differenz zwischen dem Pumpendruck pP und dem im Arbeitsvolumen 5A herrschenden Arbeitsdruck pA gleich dem Nominaldruck pN ist.
- QNB ist ein Nennvolumenstrom, der aus dem Arbeitsvolumen 5B strömt, wenn eine Differenz zwischen dem Arbeitsdruck pB und dem Tankdruck pT gleich dem Nominaldruck pN ist.

Wie bereits erwähnt, ist der Linearisierungsfaktor F vom Vorzeichen der Regeldifferenz $\delta g$ abhängig. Wenn die Regeldifferenz $\delta g$ negativ ist (sign$\delta g$ = -1), ergibt sich der Linearisierungsfaktor F zu

$$F = K \cdot \frac{\frac{AKB}{hB} + \frac{AKA}{hA}}{\sqrt{\frac{pP - pB*}{pN}} \cdot \frac{QNB}{hB} + \sqrt{\frac{pA* - pT}{pN}} \cdot \frac{QNA}{hA}} \qquad (8)$$

Die Ermittlungseinrichtung 19 berechnet vorzugsweise beide Werte und wählt anhand des Vorzeichens der Regeldifferenz $\delta g$ den korrekten Linearisierungsfaktor F aus.

FIG 5 zeigt eine mögliche Ausgestaltung der Regeleinrichtung 11 für den Fall, dass die Sollgröße g* und die Istgröße g die Positionen bzw. Stellungen s*, s des Kolbens 3 der Hydraulikzylindereinheit 1 sind. In diesem Fall ist die Verstellgeschwindigkeit der Istgröße die (mechanische) Geschwindigkeit, mit welcher der Kolben 3 verschoben wird.

Im Falle der Ausgestaltung von FIG 5 wirkt der Regler 15 als Positionsregler. Zusätzlich weist die Regeleinrichtung 11 einen Kraftregler 22, ein erstes Geschwindigkeitsfilter 23, ein zweites Geschwindigkeitsfilter 24 und ein Verzögerungsglied 25 auf.

Dem Positionsregler 15 wird als Sollgröße g* eine Sollstellung s* zugeführt. Die Sollstellung s* ist diejenige Position, die vom Kolben 3 der Hydraulikzylindereinheit 1 angefahren werden soll. Dem Positionsregler 15 wird weiterhin als Istgröße g die Iststellung s zugeführt. Der Regler 15 ermittelt anhand der Sollstellung s* und der Iststellung s ein Sollgeschwindigkeitssignal vK*. Das Sollgeschwindigkeitssignal vK* umfasst vorzugsweise einen Proportionalanteil, also einen Anteil, der proportional zur Regeldifferenz $\delta g$ ist. Es ist möglich, dass das Sollgeschwindigkeitssignal vK* ausschließlich den Proportionalanteil aufweist. Alternativ kann das Sollgeschwindigkeitssignal vK* zusätzlich einen Integralanteil und/oder einen Differenzialanteil umfassen.

Das Sollgeschwindigkeitssignal vK* wird dem ersten Geschwindigkeitsfilter 23 zugeführt. Mittels des ersten Geschwindigkeitsfilters 23 wird das Sollgeschwindigkeitssignal vK* zu einem gefilterten Geschwindigkeitssignal vF gefiltert. Das erste Geschwindigkeitsfilter 23 ist vorzugsweise so ausgelegt, dass Eigenschwingungen des Hydrauliksystems möglichst wenig angeregt werden. Es weist in der Regel intern ein nicht dargestelltes Verzögerungsglied auf - beispielsweise ein PT2-Glied - und berücksichtigt weiterhin die erforderlichen Beschleunigungs- und Reibungsanteile, die in der Hydraulikzylindereinheit 1 auftreten.

Eine Filtercharakteristik des ersten Geschwindigkeitsfilters 23 kann nach Bedarf ausgelegt sein. In Versuchen hat es sich als vorteilhaft erwiesen, wenn das erste Geschwindigkeitsfilter 23 eine Filtercharakteristik aufweist, die der Beziehung

$$\frac{vF}{vK*} = \frac{1 + a \cdot S + b \cdot S^2}{1 + c \cdot S + d \cdot S^2} \qquad (9)$$

genügt. In der oben genannten Formel ist S der Laplace-Operator. a, b, c und d sind Parameter.

Das mittels des ersten Geschwindigkeitsfilters 23 gefilterte Geschwindigkeitssignal vF wird einem Knotenpunkt 26 zugeführt, dem weiterhin ein Kraftreglerausgangssignal vFC zugeführt wird. Das gefilterte Geschwindigkeitssignal vF und das Kraftreglerausgangssignal vFC werden im Knotenpunkt 26 zu einem Summensignal summiert. Das Summensignal entspricht, verglichen mit FIG 2 und entsprechend der Darstellung in FIG 5, der vorläufigen Stellgröße u'. Die Vorgehensweise gemäß FIG 5 kann auch auf die Ausgestaltung gemäß FIG 3 angewandt werden. In diesem Fall entspricht das Summensignal der Stellgröße u.

Dem Kraftregler 22 werden eine erwartete Verstellkraft FEV, eine Kolbenkraft FK und eine Eigenkraft FE zugeführt. Die Kolbenkraft FK ist diejenige Kraft, die von der Hydraulikzylindereinheit 1 auf den Kolben 3 ausgeübt wird. Sie ergibt sich durch die wirksamen Kolbenflächen AKA, AKB des Kolbens 3 und die auf die wirksamen Flächen AKA, AKB wirkenden Arbeitsdrücke pA, pB. Die Eigenkraft FE berücksichtigt insbesondere die Gewichtskraft, welche durch ein Eigengewicht der mittels des Kolbens 3 bewegten Masse bestimmt ist. Der Kraftregler 14 ermittelt anhand der erwarteten Verstellkraft FEV, der Kolbenkraft FK und der Eigenkraft FE das Kraftreglerausgangssignal vFC.

Der Kraftregler 22 stabilisiert das Hydrauliksystem. Er ist vorzugsweise als Regler mit Differenzialverhalten ausgebildet, so dass das Kraftreglerausgangssignal vFC im stationären Zustand der Hydraulikzylindereinheit 1 zu Null wird.

Die erwartete Verstellkraft FEV ist diejenige Kraft, die auf Grund von Reibungskräften und Beschleunigungen erwartet wird. Sie wird von der Regeleinrichtung 11 anhand der vom Regler 15 abgegebenen Größe vK* ermittelt. Insbesondere wird sie dadurch ermittelt, dass das Sollgeschwindigkeitssignal vK* zunächst mittels des zweiten Geschwindigkeitsfilters 24 zu einer Verstellkraft F' gefiltert wird und sodann mittels des Verzögerungsgliedes 25 verzögert wird.

Das zweite Geschwindigkeitsfilter 24 liefert als Ausgangssignal die Summe aus Beschleunigungskraft und Reibungskraft. Eine Filtercharakteristik, die das zweite Geschwindigkeitsfilter 16 aufweist, kann zu diesem Zweck nach Bedarf ausgebildet sein. In Versuchen hat es sich als vorteilhaft erwiesen, dass die Filtercharakteristik des zweiten Geschwindigkeitsfilters 16 der Beziehung

$$\frac{F'}{vK^*} = \frac{e + f \cdot S}{1 + g \cdot S + h \cdot S^2} \qquad (10)$$

genügt. F' ist in obiger Beziehung das Ausgangssignal des zweiten Geschwindigkeitsfilters. vK* ist das Sollgeschwindigkeitssignal. S ist wieder der Laplace-Operator. e, f, g und h sind Parameter.

In vielen Fällen gilt weiterhin mindestens eine der nachfolgenden Beziehungen. Oftmals gelten sogar alle der nachfolgenden Beziehungen:

$$d = c^2 / 2 \qquad (11)$$

$$h = g^2 / 2 \qquad (12)$$

$$g = c \qquad (13)$$

$$h = d \qquad (14)$$

$$e / f = a / b \qquad (15)$$

Das Verzögerungsglied 25 dient dazu, die Dynamik der Ventilsteuereinheit 7 nachzubilden. Dadurch wird erreicht, dass das vom Verzögerungsglied 25 ausgegebene Signal FEV mit der Kolbenkraft FK synchronisiert ist. Das Verzögerungsglied 25 kann nach Bedarf ausgebildet sein, sofern es die gewünschte Funktionalität bewirkt. In der Regel ist das Verzögerungsglied 25 als PT2-Glied ausgebildet.

Die Verstellkraft F' wird einem Knotenpunkt 27 zugeführt. Dem Knotenpunkt 27 wird weiterhin die Eigenkraft FE zurückgeführt. Im Knotenpunkt 27 werden die Verstellkraft F' und die Eigenkraft FE zur Sollkolbenkraft FKL addiert. Die Regeleinrichtung 11 ermittelt somit die Sollkolbenkraft FKL anhand der Eigenkraft FE und der Verstellkraft F'.

FIG 6 zeigt eine mögliche Ausgestaltung der Regeleinrichtung 11 für den Fall, dass die Sollgröße g* eine Solllastkraft FL* ist. Im Falle der Ausgestaltung von FIG 6 wirkt der Regler 15 als Kraftregler. Mittels des Reglers 15 wird als Istgröße g eine Istlastkraft geregelt, welche die Hydraulikzylindereinheit 1 über ein mechanisches System auf eine Last ausübt. Eine auf den Kolben 3 wirkende Kolbenkraft FK ist - wie bei der Ausgestaltung gemäß FIG 5 auch - diejenige Kraft, die von der Hydraulikzylindereinheit 1 auf den Kolben 3 ausgeübt wird. Sie ergibt sich durch die wirksamen Kolbenflächen AKA, AKB des Kolbens 3 und die auf die wirksamen Flächen AKA, AKB wirkenden Arbeitsdrücke pA, pB. Die Solllastkraft FL* ist diejenige Kraft, die vom Kolben 3 auf eine vom Kolben 3 betätigte Last ausgeübt werden soll.

Gemäß FIG 6 umfasst der Regler 15 einen Lastkraftregler 28, einen Kraftregler 29, einen Lastbeobachter 30 und ein Verzögerungsglied 31.

Dem Lastkraftregler 28 werden die Solllastkraft FL* und eine erwartete Istlastkraft FL' - also ein rechnerisch ermittelter Wert für die Istlastkraft - zugeführt. Die erwartete Istlastkraft FL' wird vom Lastbeobachter 30 ermittelt.

Der Lastkraftregler 28 regelt die Lastkraft. Der Lastkraftregler 28 ermittelt zu diesem Zweck anhand der Differenz von Solllastkraft FL* und erwarteter Istlastkraft FL' ein Ausgangssignal vLC, nachfolgend Lastausgangssignal genannt. Der Lastkraftregler 28 ist üblicherweise als P-Regler oder als PI-Regler ausgebildet.

Das Verzögerungsglied 31 bildet die Dynamik der Ventilsteuereinheit 7 nach. Dadurch wird erreicht, dass das verzögerte Summensignal vU mit der Kolbenkraft FK synchronisiert ist. Das Verzögerungsglied 31 kann nach Bedarf ausgebildet sein, sofern es die soeben erläuterte Funktionalität bewirkt. In der Regel ist das Verzögerungsglied 31 als PT2-Glied ausgebildet.

Dem Kraftregler 29 sind zwei Knotenpunkte 32, 33 vorgeordnet. Im Knotenpunkt 32 wird zur Solllastkraft FL* eine Eigenkraft FE addiert. Die Eigenkraft FE berücksichtigt - wie bei der Ausgestaltung gemäß FIG 5 auch - insbesondere die Gewichtskraft, welche durch ein Eigengewicht der mittels des Kolbens 3 bewegten Masse bestimmt ist. Im Knotenpunkt 33 wird von dieser Summe die Kolbenkraft FK subtrahiert. Das Ausgangssignal des Knotenpunkts 33 wird dem Kraftregler 29 zugeführt. Der Kraftregler 29 ermittelt ein Ausgangssignal vFC, nachfolgend Kraftreglerausgangssignal genannt. Der Kraftregler 29 ist üblicherweise als P-Regler oder als PD-Regler ausgebildet. Der Kraftregler 29 stabilisiert die Regelung und ermöglicht eine höhere Dynamik.

Die Ausgangssignale vLC, vFC des Lastkraftreglers 28 und des Kraftreglers 29 werden in einem Knotenpunkt 34 zur vorläufigen Stellgröße u' summiert. Die vorläufige Stellgröße u' wird der Linearisierungseinheit 17 zugeführt, welche die vorläufige Stellgröße u' linearisiert. Die Linearisierungseinheit 17 ist der Ventilsteuereinheit 7 unmittelbar vorgeordnet. Sie kompensiert - siehe die Ausführungen zu den FIG 1, 2 und 4 - Nichtlinearitäten des Hydrauliksystems.

Damit der Lastbeobachter 30 die erwartete Istlastkraft FL' ermitteln kann, werden dem Lastbeobachter 30 die Kolbenkraft FK, die Eigenkraft FE und eine verzögerte Stellgröße u" zugeführt. Die verzögerte Stellgröße u" wird mittels des Verzögerungsgliedes 31 durch Verzögern der vorläufigen Stellgröße u' ermittelt.

Dem Sollwertermittler 20 wird gemäß FIG 6 als Sollkolbenkraft FKL die Summe von Solllastkraft FL* und Eigenkraft FE zugeführt. Die Regeleinrichtung 11 ermittelt somit die Sollkolbenkraft FKL anhand der Eigenkraft FE und der Sollgröße FL*.

Vorzugsweise wird die Summe von Solllastkraft FL* und Eigenkraft FE dem Sollwertermittler 20 nicht direkt zugeführt, sondern zuvor mittels eines Verzögerungsgliedes 35 verzögert. Das Verzögerungsglied 35 bildet die Dynamik der Regelung abzüglich der Dynamik der Ventilsteuereinheit 7 nach. Dadurch wird erreicht, dass die Sollkolbenkraft FKL mit der Kolbenkraft FK synchronisiert ist. Das Verzögerungsglied 35 kann nach Bedarf ausgebildet sein, sofern es die soeben erläuterte Funktionalität bewirkt. In der Regel ist das Verzögerungsglied 35 als PT2-Glied ausgebildet.

Der Lastbeobachter 30 kann ebenfalls nach Bedarf ausgebildet sein. Entscheidend ist, dass er die Istlastkraft nachbildet. Der Lastbeobachter 30 wirkt somit als entsprechender Softsensor, der anhand (mindestens) einer gemessenen Größe (nämlich der Kolbenkraft FK) die nicht gemessene Istlastkraft nachbildet. Der Aufbau und die Wirkungsweise des Lastbeobachters 30 sind Fachleuten allgemein bekannt. Zu seiner Implementierung gibt es mehrere Möglichkeiten, die Fachleuten ebenfalls bekannt sind. Bevorzugt ist eine Ausgestaltung, wie sie in der WO 2011/000 856 A2 in Verbindung mit deren Figur 3 erläutert ist.

Die Summe der mit den wirksamen Arbeitsflächen AKA, AKB des Kolbens 3 gewichteten Sollwerte pA*, pB* korrespondieren mit der Sollkolbenkraft FKL. Es gilt also die Beziehung

$$FKL = pA^* \cdot AKA + pB^* \cdot AKB \tag{16}$$

Eine einzige Gleichung - hier die Gleichung 16 - ist jedoch zur Bestimmung von zwei unbekannten Größen - hier den Sollwerten pA*, pB* - unzureichend. Es ist somit eine weitere Bedingung erforderlich, um die Sollwerte pA*, pB* eindeutig bestimmen zu können. Eine Möglichkeit zur eindeutigen Bestimmung der Sollwerte pA*, pB* besteht darin, dass die Regeleinrichtung 11 die Sollwerte pA*, pB* für die beidseitig des Kolbens 3 herrschenden Arbeitsdrücke pA, pB derart ermittelt, dass die Summe der Sollwerte pA*, pB* gleich einer Linearkombination der Summe der beidseitig des Kolbens 3 herrschenden Arbeitsdrücke pA, pB und der Summe der zufluss- und abflussseitig der Ventilsteuereinheit 7 herrschenden Arbeitsdrücke pP, pT ist. In diesem Fall gilt also als zusätzliche Bedingung die Beziehung

$$pA^* + pB^* = \alpha \cdot (pA + pB) + (1 - \alpha) \cdot (pP + pT) \tag{17}$$

$\alpha$ ist ein Wichtungsfaktor, der minimal 0 und maximal 1 beträgt. Wenn der Wichtungsfaktor $\alpha$ den Wert 1 aufweist, ermittelt der Sollwertermittler 20 die Sollwerte pA*, pB* für die beidseitig des Kolbens 3 herrschenden Arbeitsdrücke pA, pB ausschließlich anhand der Sollkolbenkraft FKL und der beidseitig des Kolbens 3 herrschenden Arbeitsdrücke pA, pB. Für jeden anderen Wert des Wichtungsfaktors $\alpha$ berücksichtigt der Sollwertermittler 20 zusätzlich - bzw. im Fall, dass der Wichtungsfaktor $\alpha$ den Wert 0 aufweist, alternativ - die zufluss- und abflussseitig der Ventilsteuereinheit 7 herrschenden Arbeitsdrücke pP, pT. Eine mögliche Struktur zur Ermittlung der Sollwerte pA*, pB* für den Fall, dass die Summe der Sollwerte pA*, pB* gleich der Summe der beidseitig des Kolbens 3 herrschenden Arbeitsdrücke pA, pB ist, ist in FIG 7 dargestellt.

Gemäß FIG 7 weist die Struktur zwei Multiplizierer 36, einen Dividierer 37 und drei Knotenpunkte 38 auf. Die Multiplizierer 36 multiplizieren die ihnen zugeführten Eingangssignale pA und AKA bzw. pB und AKB miteinander. Der Dividierer 37 dividiert das ihm zugeführte Eingangssignal

$$FKL - pA \cdot AKA + pB \cdot AKB \tag{18}$$

durch die Summe der wirksamen Arbeitsflächen AKA, AKB. Die Knotenpunkte 38 bilden die Summe der ihnen zugeführten Eingangssignale. Sofern ein Eingangssignal mit einem Minuszeichen versehen ist, geht das jeweilige Eingangssignal negativ in die Summe ein, wird also subtrahiert. An den Ausgängen der Struktur werden die Sollwerte pA*, pB* ausgegeben. Die Sollwerte pA*, pB* ergeben sich somit zu

$$pA^* = pA + \frac{FKL - pA \cdot AKA + pB \cdot AKB}{AKA + AKB} \tag{19}$$

$$pB^* = pB - \frac{FKL - pA \cdot AKA + pB \cdot AKB}{AKA + AKB} \tag{20}$$

Diese Gleichungen können umgeformt werden zu

$$pA^* = \frac{(pA + pB) \cdot AKB + FKL}{AKA + AKB} \tag{21}$$

$$pB^* = \frac{(pA + pB) \cdot AKA - FKL}{AKA + AKB} \qquad (22)$$

FIG 8 zeigt eine weitergehende Ausgestaltung von FIG 7. Mittels der Ausgestaltung von FIG 8 wird erreicht, dass die Regeleinrichtung 11 die Sollwerte pA*, pB* für die beidseitig des Kolbens 3 herrschenden Arbeitsdrücke pA, pB auf Werte zwischen den zufluss- und abflussseitig der Ventilsteuereinheit 7 herrschenden Arbeitsdrücken pT, pP begrenzt.

Gemäß FIG 8 sind sowohl eingangsseitig der Struktur als auch ausgangsseitig als auch innerhalb der Struktur Begrenzer 39 vorhanden. Mittels der Begrenzer 39 erfolgt eine Begrenzung des den jeweiligen Begrenzer 39 durchlaufenden Signals auf einen Wert zwischen dem Tankdruck pT und dem Pumpendruck pP. Ferner sind zusätzlich zu den Multiplizierern 36 weitere Multiplizierer 40 vorhanden, zusätzlich zu dem Dividierer 37 weitere Dividierer 41 vorhanden und zusätzlich zu den Knotenpunkten 38 weitere Knotenpunkte 42. Die Funktion und Wirkungsweise ergibt sich direkt aus der Darstellung in FIG 8.

Es ist möglich, die beidseitig des Kolbens 3 herrschenden Arbeitsdrücke pA, pB dem Sollwertermittler 20 direkt zuzuführen. Vorzugsweise sind dem Sollwertermittler 20 jedoch entsprechend der Darstellung in FIG 9 Glättungsglieder 43 vorgeordnetes. Mittels der Glättungsglieder 43 werden die Arbeitsdrücke pA, pB geglättet. Eine Glättungszeitkonstante der Glättungsglieder 43 kann zwischen 10 ms und 1000 ms liegen, beispielsweise zwischen 30 ms und 300 ms. Als vorteilhaft hat sich in Versuchen ein Wert von ca. 100 ms erwiesen.

Die Erfindung wurde vorstehend in Verbindung mit einer Hydraulikzylindereinheit 1 erläutert, bei welcher die Sollgröße g* und die Istgröße g translatorische Größen sind. Die Erfindung ist jedoch ebenso anwendbar, wenn die Sollgröße g* und die Istgröße g rotatorische Größen sind. In diesem Fall sind Strecken durch entsprechende Winkel zu ersetzen und Kräfte durch entsprechende Momente zu ersetzen.

Die vorliegende Erfindung weist viele Vorteile auf. Insbesondere ist die Gefahr von Schwingungen deutlich reduziert, weil Schwingungen zwar zu einer gegenphasigen Oszillation der Arbeitsdrücke pA, pB führen, in die Gleichungen zur Ermittlung der Sollwerte pA*, pB* - siehe insbesondere die Gleichungen 21 und 22 - und damit auch des Linearisierungsfaktors SF jedoch nur die Summe der Arbeitsdrücke pA, pB eingeht. Die Glättung der Arbeitsdrücke pA, pB führt zu einer noch weitergehenden Beruhigung des Systems.

Zusammengefasst betrifft die vorliegende Erfindung somit folgenden Sachverhalt:

Ein Regler 15 nimmt eine auf einen Kolben 3 der Hydraulikzylindereinheit 1 bezogene Sollgröße g* und eine auf den Kolben 3 der Hydraulikzylindereinheit 1 bezogene Istgröße g entgegen. Er ermittelt anhand von deren Differenz δg eine vorläufige Stellgröße u'. Eine dem Regler 15 nachgeordnete Linearisierungseinheit 17 multipliziert die vorläufige Stellgröße u' mit einem Linearisierungsfaktor F und gibt das Produkt als endgültige Stellgröße u an eine Ventilsteuereinheit 7 aus, so dass der Kolben 3 der Hydraulikzylindereinheit 1 mit einer Verstellgeschwindigkeit v verstellt wird. Die Linearisierungseinheit 17 ermittelt anhand beidseitig des Kolbens 3 herrschender Arbeitsdrücke pA, pB und/oder zufluss- und abflussseitig der Ventilsteuereinheit 7 herrschender Arbeitsdrücke pP, pT sowie einer vom Kolben 3 auszuübenden Sollkolbenkraft FKL Sollwerte pA*, pB* für die Arbeitsdrücke pA, pB. Sie bestimmt den Linearisierungsfaktor F dynamisch als Funktion einer Iststellung s des Kolbens 3, der Sollwerte pA*, pB* sowie der zufluss- und abflussseitig der Ventilsteuereinheit 7 herrschenden Arbeitsdrücke pP, pT.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Regeleinrichtung zum Regeln einer Hydraulikzylindereinheit (1),

   - wobei die Regeleinrichtung einen Regler (15) aufweist, der eingangsseitig eine auf einen Kolben (3) der Hydraulikzylindereinheit (1) bezogene Sollgröße (g*) und eine auf den Kolben (3) der Hydraulikzylindereinheit (1) bezogene Istgröße (g) entgegennimmt und anhand der Differenz (δg) von Sollgröße (g*) und Istgröße (g) eine vorläufige Stellgröße (u') für eine Ventilsteuereinheit (7) der Hydraulikzylindereinheit (1) ermittelt,
   - wobei dem Regler (15) eine Linearisierungseinheit (17) nachgeordnet ist, welche die vorläufige Stellgröße (u') mit einem Linearisierungsfaktor (F) multipliziert und die mit dem Linearisierungsfaktor (F) multiplizierte vorläufige Stellgröße (u') als endgültige Stellgröße (u) an die Ventilsteuereinheit (7) ausgibt, so dass die Istgröße (g) der Sollgröße (g*) mit einer Verstellgeschwindigkeit nachgeführt wird,

- wobei die Linearisierungseinheit (17) anhand beidseitig des Kolbens (3) herrschender Arbeitsdrücke (pA, pB) und/oder zufluss- und abflussseitig der Ventilsteuereinheit (7) herrschender Arbeitsdrücke (pP, pT) sowie einer vom Kolben (3) auszuübenden Sollkolbenkraft (FKL) Sollwerte (pA*, pB*) für die beidseitig des Kolbens (3) herrschenden Arbeitsdrücke (pA, pB) ermittelt,
- wobei die Linearisierungseinheit (17) den Linearisierungsfaktor (F) dynamisch als Funktion einer Iststellung (s) des Kolbens (3), der Sollwerte (pA*, pB*) für die beidseitig des Kolbens (3) herrschenden Arbeitsdrücke (pA, pB) sowie der zufluss- und abflussseitig der Ventilsteuereinheit (7) herrschenden Arbeitsdrücke (pP, pT) bestimmt.

**2.** Regeleinrichtung nach Anspruch 1,
**dadurch gekennzeichnet,**
**dass** der Regler (15) als P-Regler ausgebildet ist.

**3.** Regeleinrichtung zum Regeln einer Hydraulikzylindereinheit (1),

- wobei die Regeleinrichtung einen als P-Regler ausgebildeten Regler (15) aufweist, der eingangsseitig eine Regelgröße ($\delta$g') entgegennimmt, anhand der Regelgröße ($\delta$g') eine Stellgröße (u) für eine Ventilsteuereinheit (7) der Hydraulikzylindereinheit (1) ermittelt und die Stellgröße (u) an die Ventilsteuereinheit (7) ausgibt, so dass eine auf einen Kolben (3) der Hydraulikzylindereinheit (1) bezogene Istgröße (g) einer auf den Kolben (3) der Hydraulikzylindereinheit (1) bezogenen Sollgröße (g*) mit einer Verstellgeschwindigkeit nachgeführt wird,
- wobei dem Regler (15) eine Linearisierungseinheit (17) vorgeordnet ist, welche die Sollgröße (g*) und die Istgröße (g) entgegennimmt, deren Differenz ($\delta$g) mit einem Linearisierungsfaktor (F) multipliziert und die mit dem Linearisierungsfaktor (F) multiplizierte Differenz ($\delta$g) als Regelgröße ($\delta$g') an den Regler (15) ausgibt,
- wobei die Linearisierungseinheit (17) anhand beidseitig des Kolbens (3) herrschender Arbeitsdrücke (pA, pB) und/oder zufluss- und abflussseitig der Ventilsteuereinheit (7) herrschender Arbeitsdrücke (pP, pT) sowie einer vom Kolben (3) auszuübenden Sollkolbenkraft (FKL) Sollwerte (pA*, pB*) für die beidseitig des Kolbens (3) herrschenden Arbeitsdrücke (pA, pB) ermittelt,
- wobei die Linearisierungseinheit (17) den Linearisierungsfaktor (F) dynamisch als Funktion einer Iststellung (s) des Kolbens (3), der Sollwerte (pA*, pB*) für die beidseitig des Kolbens (3) herrschenden Arbeitsdrücke (pA, pB) sowie der zufluss- und abflussseitig der Ventilsteuereinheit (7) herrschenden Arbeitsdrücke (pP, pT) bestimmt.

**4.** Regeleinrichtung nach Anspruch 1, 2 oder 3, **dadurch gekennzeichnet,**
**dass** die Sollgröße (g*) und die Istgröße (g) Positionen (s*, s) des Kolbens (3) der Hydraulikzylindereinheit (1) sind und dass die Regeleinrichtung die Sollkolbenkraft (FKL) anhand einer Eigenkraft (FE) und einer Verstellkraft (F') ermittelt, dass die Eigenkraft (FE) durch ein Eigengewicht einer mittels des Kolbens (3) bewegten Masse bestimmt ist und dass die Regeleinrichtung die Verstellkraft (F') anhand einer vom Regler (15) abgegebenen Größe (vK*) ermittelt, aus der durch Filterung die vorläufige oder die endgültige Stellgröße (u', u) ermittelt wird.

**5.** Regeleinrichtung nach Anspruch 1, 2 oder 3,
**dadurch gekennzeichnet,**
**dass** die Sollgröße (g*) eine Solllastkraft (FL*) ist, dass die Istgröße (g) eine von der Hydraulikzylindereinheit (1) auf eine Last ausgeübte Istlastkraft ist, dass die Regeleinrichtung die Sollkolbenkraft (FKL) anhand einer Eigenkraft (FE) und der Sollgröße (g*) ermittelt und dass die Eigenkraft (FE) durch ein Eigengewicht einer mittels des Kolbens (3) bewegten Masse bestimmt ist.

**6.** Regeleinrichtung nach Anspruch 5,
**dadurch gekennzeichnet,**
**dass** die Regeleinrichtung anhand der Eigenkraft (FE) und der Sollgröße (g*) einen unverzögerten Kraftsollwert ermittelt und dass die Regeleinrichtung die Sollkolbenkraft (FKL) durch Verzögern des unverzögerten Kraftsollwerts mittels eines Verzögerungsgliedes (35) ermittelt.

**7.** Regeleinrichtung nach einem der obigen Ansprüche,
**dadurch gekennzeichnet,**
**dass** die Regeleinrichtung die Sollwerte (pA*, pB*) für die beidseitig des Kolbens (3) herrschenden Arbeitsdrücke (pA, pB) derart ermittelt, dass die Summe der Sollwerte (pA*, pB*) gleich einer Linearkombination der Summe der beidseitig des Kolbens (3) herrschenden Arbeitsdrücke (pA, pB) und der Summe der zufluss- und abflussseitig der Ventilsteuereinheit (7) herrschenden Arbeitsdrücke (pP, pT) ist.

**8.** Regeleinrichtung nach einem der obigen Ansprüche,
**dadurch gekennzeichnet,**
**dass** die Regeleinrichtung die Sollwerte (pA*, pB*) für die beidseitig des Kolbens (3) herrschenden Arbeitsdrücke (pA, pB) auf Werte zwischen den zufluss- und abflussseitig der Ventilsteuereinheit (7) herrschenden Arbeitsdrücken (pT, pP) begrenzt.

**9.** Regeleinrichtung nach einem der obigen Ansprüche,
**dadurch gekennzeichnet,**
**dass** die Regeleinrichtung die beidseitig des Kolbens (3) herrschenden Arbeitsdrücke (pA, pB) vor der Ermittlung der Sollwerte (pA*, pB*) für die beidseitig des Kolbens (3) herrschenden Arbeitsdrücke (pA, pB) glättet.

**10.** Regeleinrichtung nach einem der obigen Ansprüche,
**dadurch gekennzeichnet,**
**dass** sie als softwareprogrammierbare Regeleinrichtung ausgebildet ist und mit einem Softwaremodul (12) programmiert ist, so dass sie aufgrund der Programmierung mit dem Softwaremodul (12) nach einem der obigen Ansprüche ausgebildet ist.

**11.** Softwaremodul, das Maschinencode (14) umfasst, dessen Abarbeitung durch eine an eine Hydraulikzylindereinheit (1) angebundene softwareprogrammierbare Regeleinrichtung (11) bewirkt, dass die Regeleinrichtung (11) gemäß einem der Ansprüche 1 bis 9 ausgebildet ist.

**12.** Softwaremodul nach Anspruch 11,
**dadurch gekennzeichnet,**
**dass** es auf einem Datenträger (13) in maschinenlesbarer Form gespeichert ist.

FIG 1

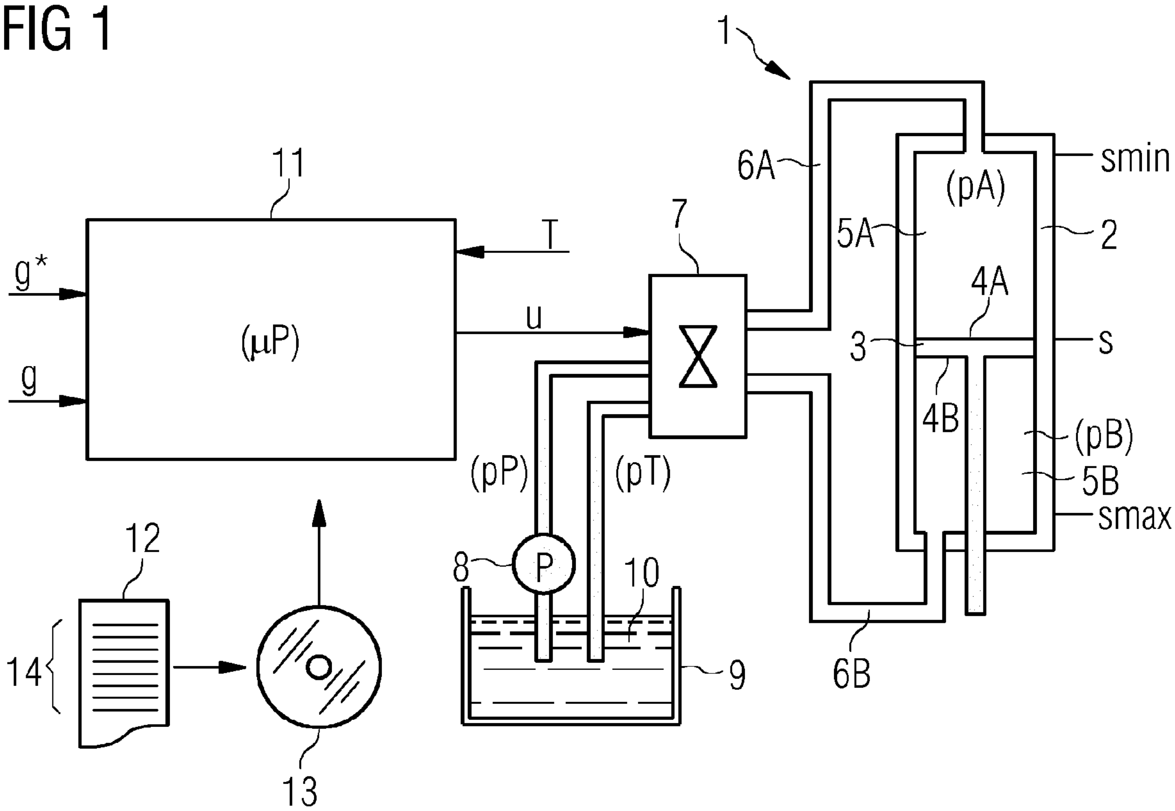
1
11
(μP)
g*
g
T
u
7
6A
5A
(pA)
smin
2
4A
3
s
4B
(pB)
5B
smax
(pP)
(pT)
8
P
10
9
6B
12
14
13

FIG 2

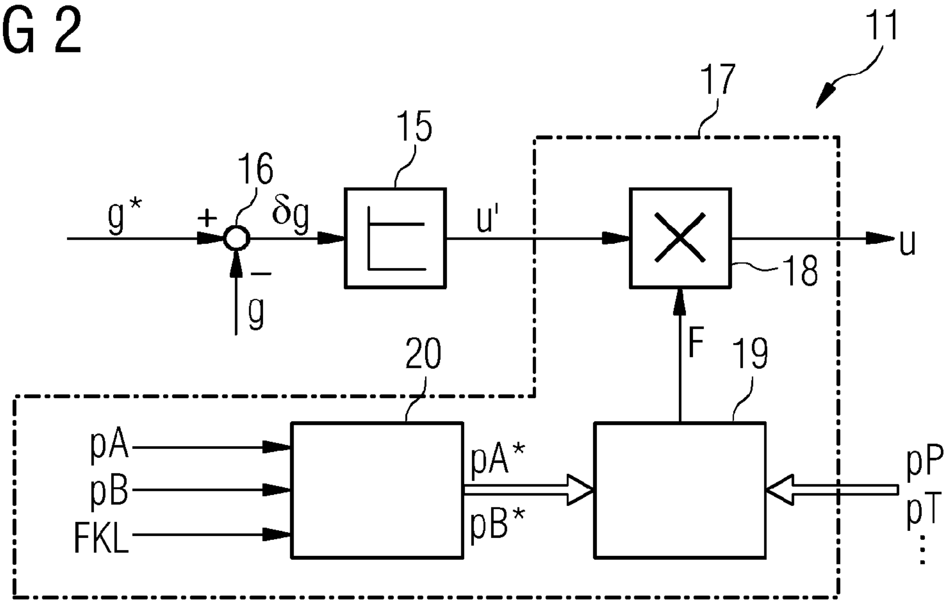
11
17
15
16
g*
+
δg
u'
u
–
18
g
F
20
19
pA
pB
FKL
pA*
pB*
pP
pT
⋮

FIG 3

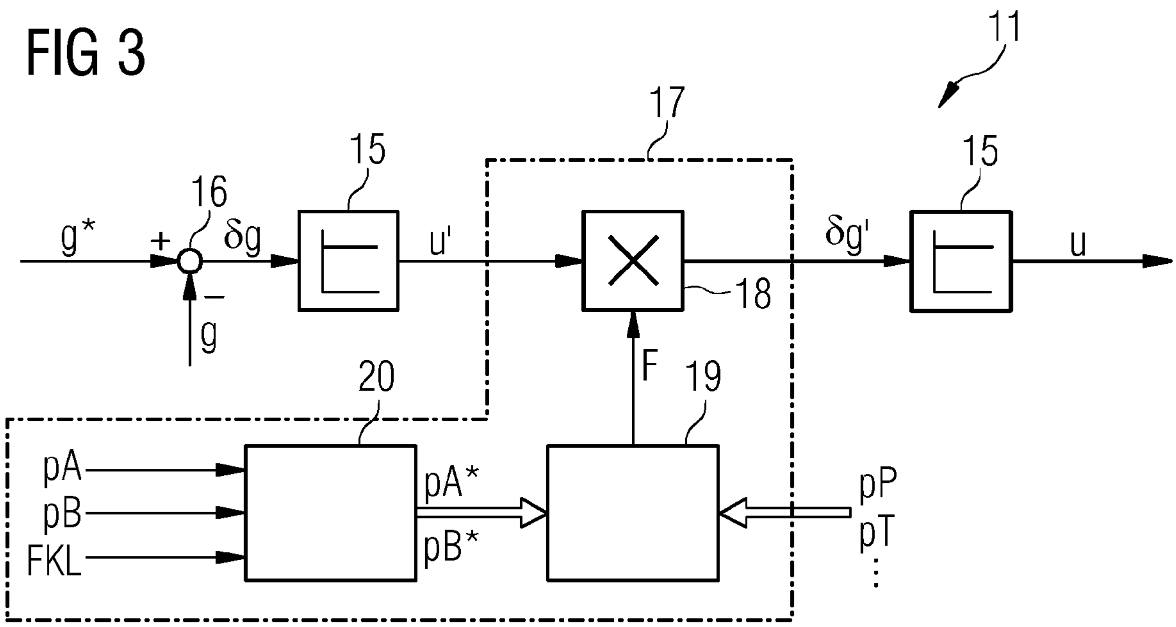
11
17
15
16
15
g*
+
δg
u'
δg'
u
–
18
g
F
20
19
pA
pB
FKL
pA*
pB*
pP
pT
⋮

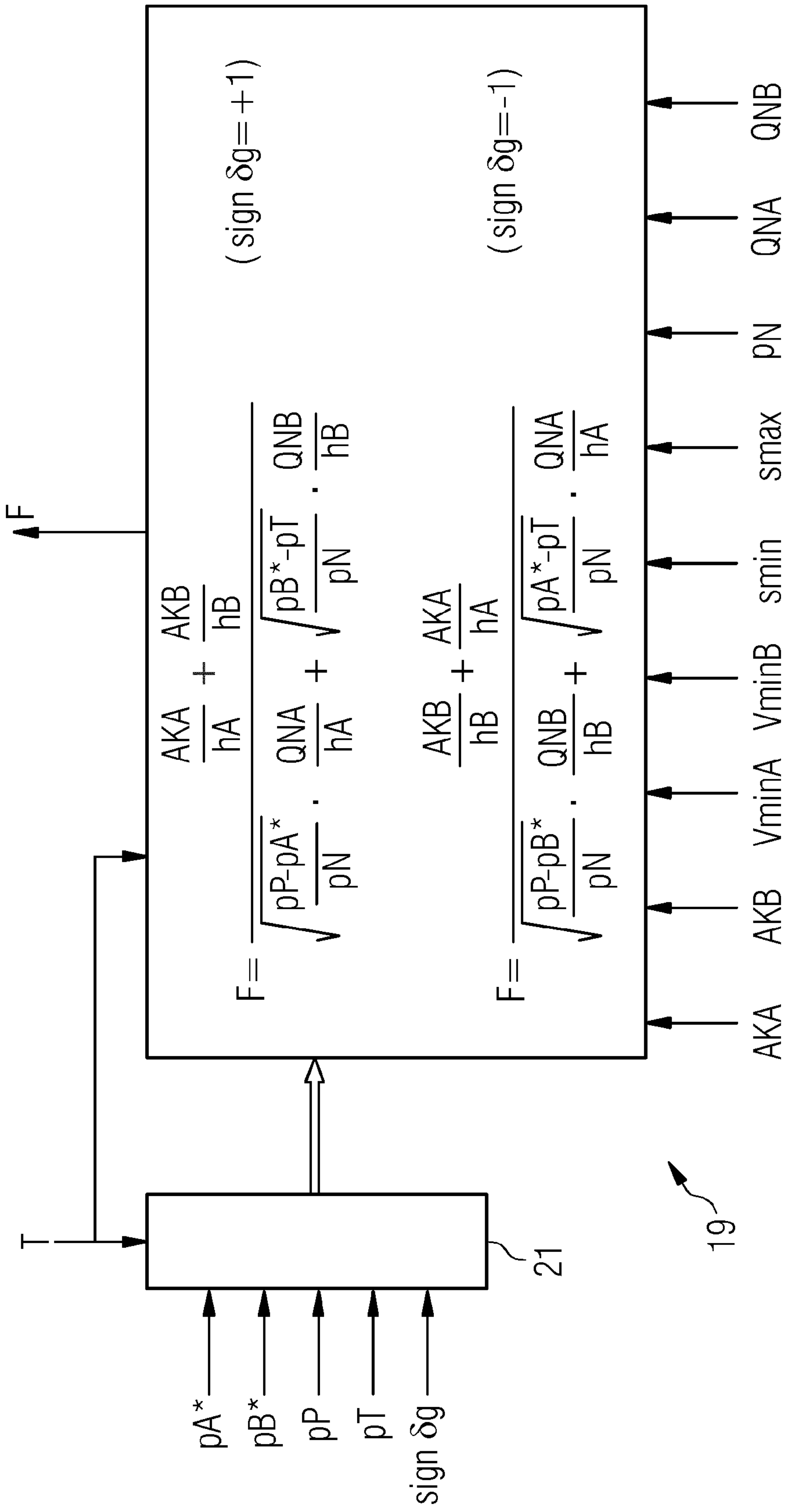
pA*
pB*
pP
pT
sign δg
T
21
19
F
F = (AKA/hA + AKB/hB) / (√((pP-pA*)/pN) · QNA/hA + √((pB*-pT)/pN) · QNB/hB)
(sign δg=+1)
F = (AKB/hB + AKA/hA) / (√((pP-pB*)/pN) · QNB/hB + √((pA*-pT)/pN) · QNA/hA)
(sign δg=-1)
AKA
AKB
VminA
VminB
smin
smax
pN
QNA
QNB

FIG 4

FIG 5

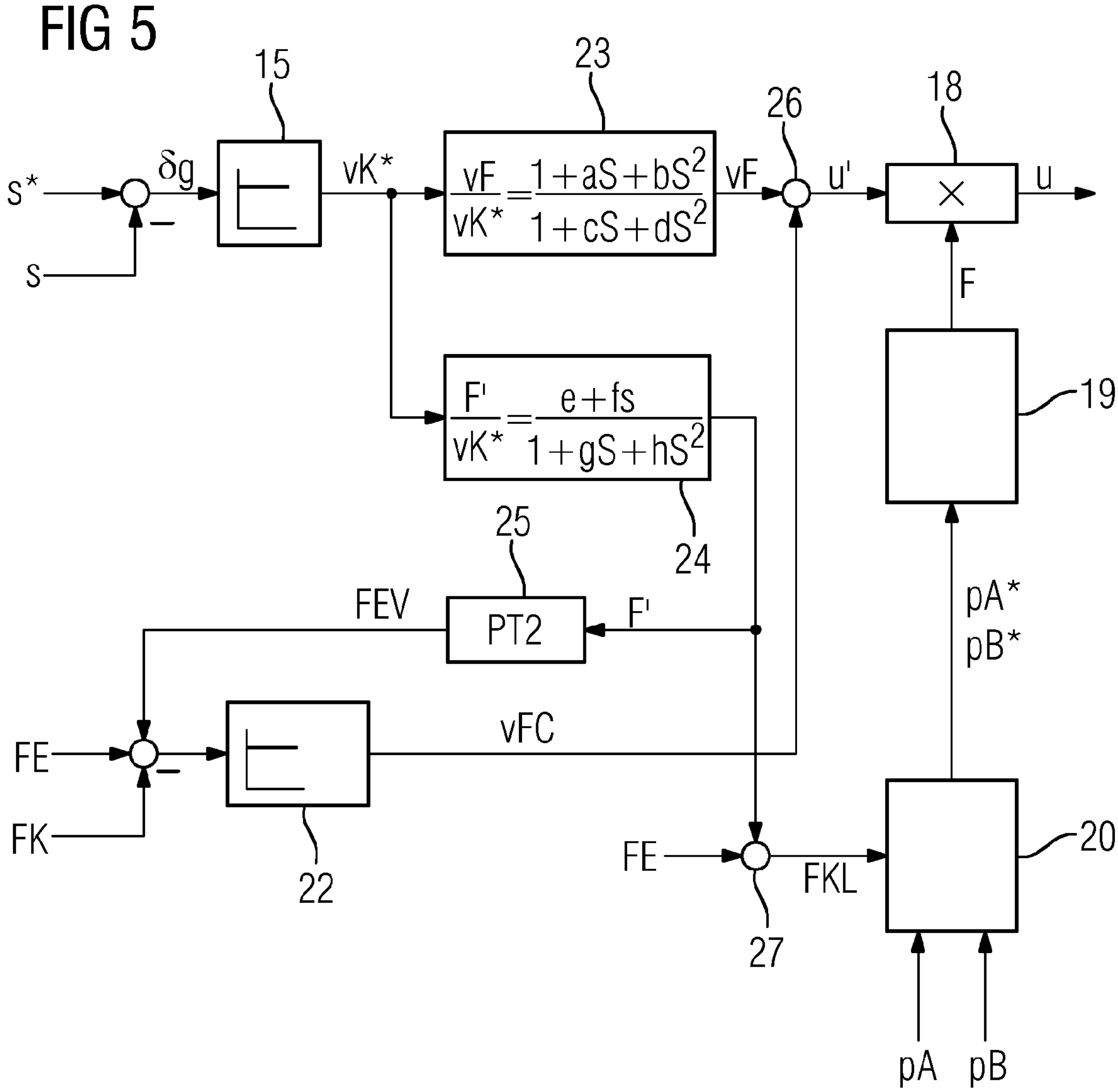
15
23
26
18
s*
δg
vK*
vF
u'
u
s
$\frac{vF}{vK^*}=\frac{1+aS+bS^2}{1+cS+dS^2}$
F
$\frac{F'}{vK^*}=\frac{e+fs}{1+gS+hS^2}$
19
24
25
FEV
PT2
F'
pA*
pB*
FE
vFC
FK
22
FE
FKL
20
27
pA
pB

FIG 6

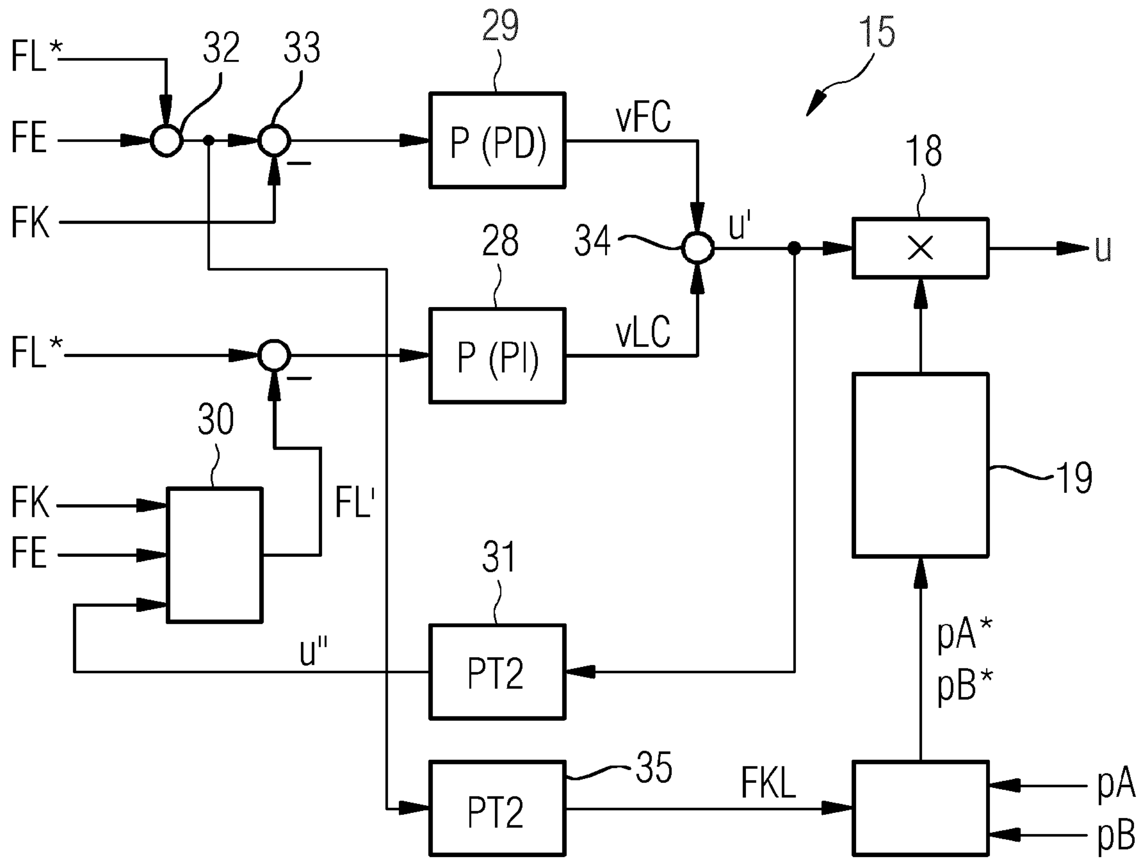
FL*
FE
FK
32
33
29
P (PD)
vFC
15
18
34
u'
×
u
28
P (PI)
vLC
FL*
30
FK
FE
FL'
19
31
u''
PT2
pA*
pB*
PT2
35
FKL
pA
pB

FIG 7

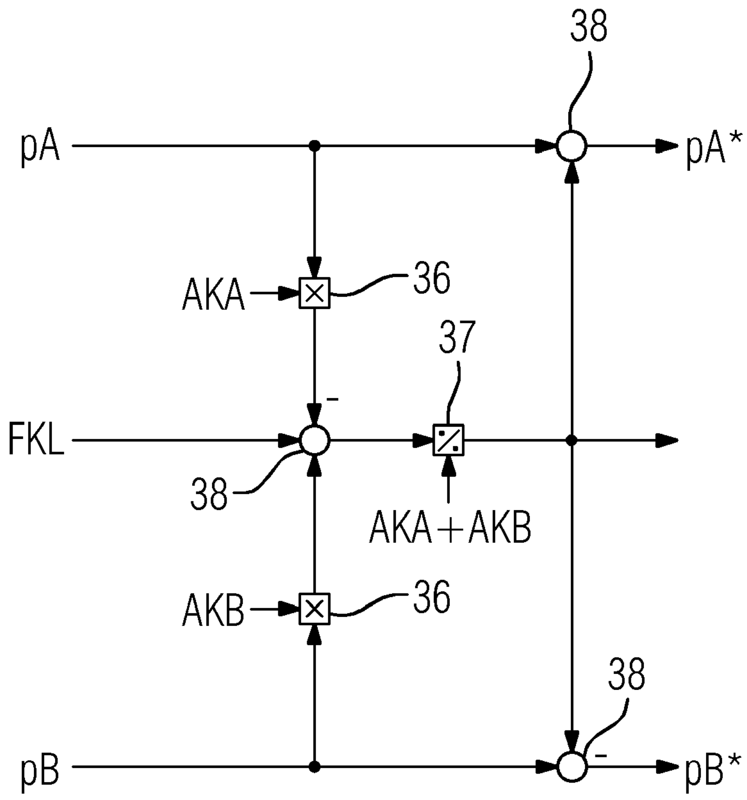

FIG 8

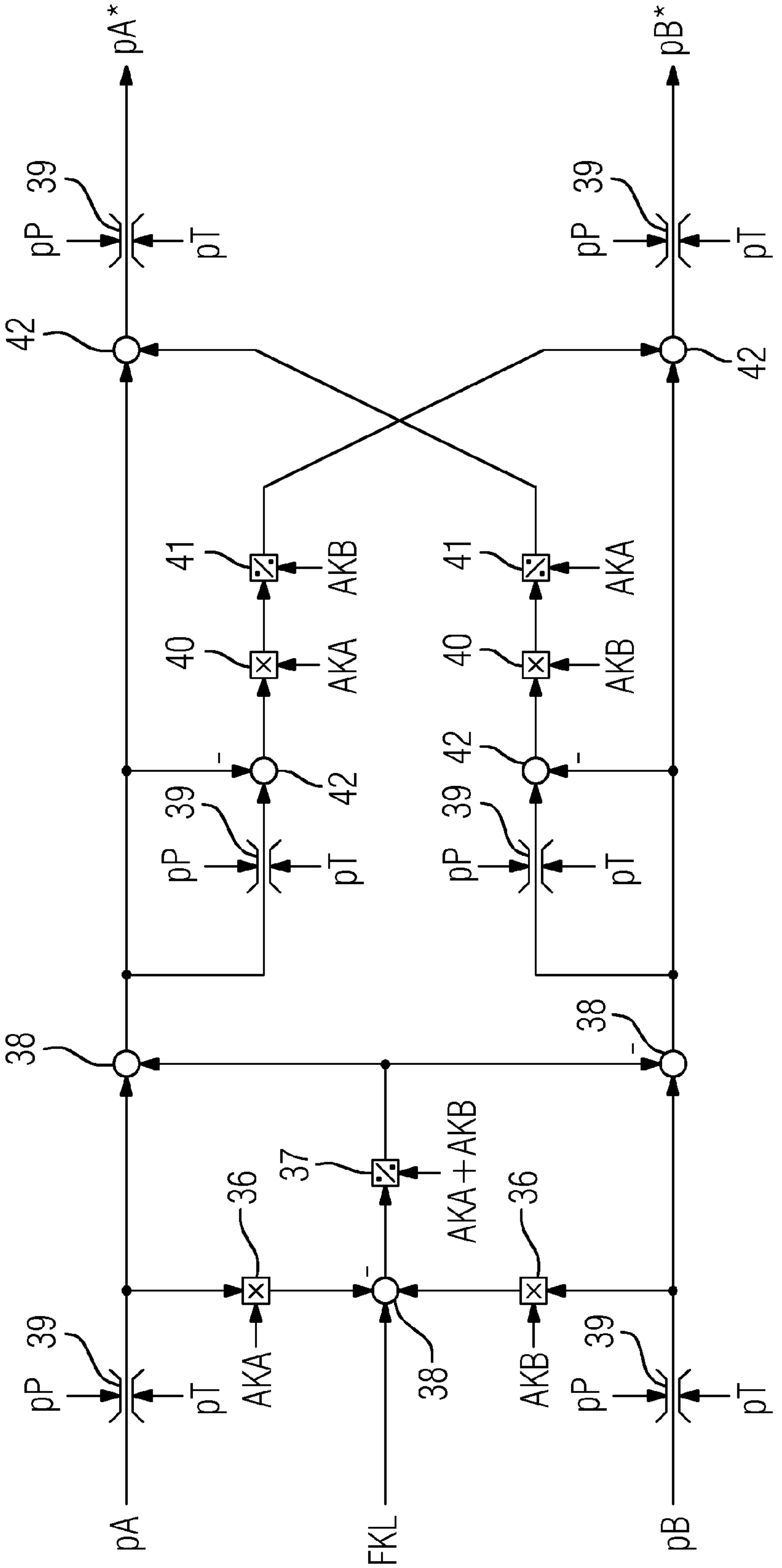

FIG 9

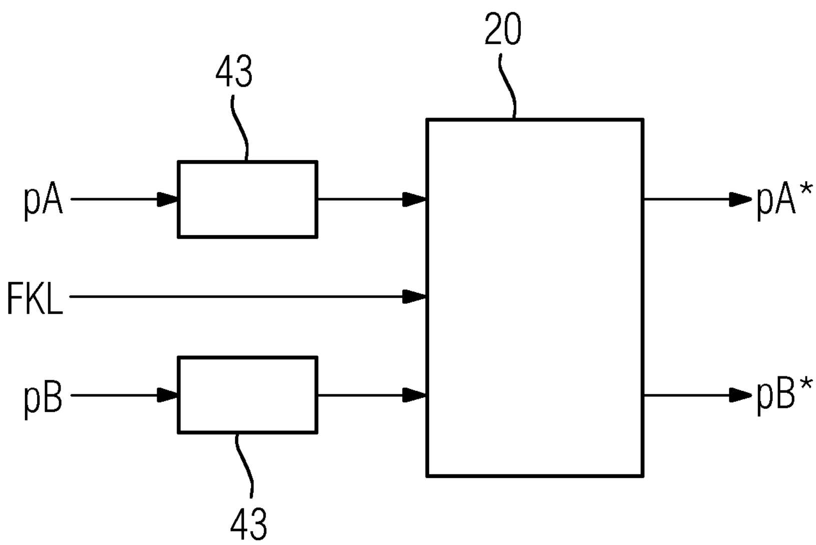

Europäisches Patentamt
European Patent Office
Office européen des brevets

# EUROPÄISCHER RECHERCHENBERICHT

Nummer der Anmeldung
EP 14 16 5962

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | WO 2009/056378 A2 (SIEMENS AG [DE]; TAUTZ WILFRIED [DE]; WOHLD DIETRICH [DE]) 7. Mai 2009 (2009-05-07) * Seite 10, Zeile 24 - Seite 12, Zeile 17 * ----- | 1,3,11 | INV. G05B11/36 |

| RECHERCHIERTE SACHGEBIETE (IPC) |
|---|
| G05B |

1 Der vorliegende Recherchenbericht wurde für alle Patentansprüche erstellt

| Recherchenort | Abschlußdatum der Recherche | Prüfer |
|---|---|---|
| Den Haag | 8. Oktober 2014 | Kelperis, K |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 14 16 5962

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-10-2014

| Im Recherchenbericht angeführtes Patentdokument | Datum der Veröffentlichung | Mitglied(er) der Patentfamilie | Datum der Veröffentlichung |
|---|---|---|---|
| WO 2009056378 A2 | 07-05-2009 | AT 504873 T | 15-04-2011 |
| | | CN 101842760 A | 22-09-2010 |
| | | DE 102007051857 B3 | 23-04-2009 |
| | | EP 2206031 A2 | 14-07-2010 |
| | | PT 2206031 E | 31-05-2011 |
| | | RU 2010121777 A | 10-12-2011 |
| | | US 2010294125 A1 | 25-11-2010 |
| | | WO 2009056378 A2 | 07-05-2009 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2009056378 A2
- WO 2011000856 A2